# EUROPÄISCHE PATENTANMELDUNG

(11) **EP 2 878 798 A1**
(43) Veröffentlichungstag der Anmeldung: **03.06.2015**
(21) Anmeldenummer: 14188052.6
(22) Anmeldetag: 08.10.2014
(51) Int. Cl.: F02M 25/08

(54) **Vorrichtung und Verfahren zur Bestimmung der Beladung eines Kraftstoffdampf-Zwischenspeichers einer Brennkraftmaschine**

(30) Priorität: 27.11.2013 DE 102013224301
(71) Anmelder: ROBERT BOSCH GMBH, 70442 Stuttgart (DE)
(72) Erfinder: Konzelmann, Uwe, 71679 Asperg (DE)

(57) **Zusammenfassung**

Es wird eine Vorrichtung (10) zur Bestimmung der Beladung eines Kraftstoffdampf-Zwischenspeichers (12) einer Brennkraftmaschine vorgeschlagen. Die Vorrichtung (10) umfasst eine schwingungsfähige Lagerung (18) des Kraftstoffdampf-Zwischenspeichers (12) und einen Sensor (16) zur Erfassung einer Eigenfrequenz des Kraftstoffdampf-Zwischenspeichers (12).

Weiterhin wird ein Verfahren zur Bestimmung der Beladung eines Kraftstoffdampf-Zwischenspeichers (12) einer Brennkraftmaschine vorgeschlagen. Dabei wird der Kraftstoffdampf-Zwischenspeicher (12) schwingungsfähig gelagert und eine Eigenfrequenz des Kraftstoffdampf-Zwischenspeichers (12) erfasst.

## Beschreibung

### Stand der Technik

Brennkraftmaschinen, insbesondere Verbrennungsmotoren für Kraftfahrzeuge, sind mit einem so genannten Kraftstoffverdunstungsrückhaltesystem ausgestattet, um zu verhindern, dass der aus dem Kraftstoffbehälter ausdampfende Kraftstoff in die Umgebung gelangt. Hierfür sind so genannte Kraftstoffdampf-Zwischenspeicher vorgesehen, die beispielsweise als Aktivkohlefilter realisiert sein können. Diese Kraftstoffdampf-Zwischenspeicher nehmen im Tank verdunstenden Kraftstoffdampf auf. Durch Spülung mit Luft erfolgt eine Regeneration dieser Filter. Die Spülluft strömt dabei durch den Aktivkohlefilter, nimmt dort Kraftstoff auf und wird als mit Kraftstoff beladenes Regeneriergas dem Verbrennungsmotor zugeführt. Die Regenerierung des Aktivkohlefilters durch Spülung mit Luft erfolgt beispielsweise durch Öffnen eines Tankentlüftungsventils zwischen dem Aktivkohlefilter und dem Saugrohr des Verbrennungsmotors. Durch den Saugrohrunterdruck wird in diesem Fall die Spülung des Filters über eine Frischluftöffnung vorgenommen. Das mit Kraftstoff beladene Regeneriergas strömt in diesem Falle dem Druckgefälle folgend über das Tankentlüftungsventil zum Verbrennungsmotor. Um das Emissionsverhalten des Verbrennungsmotors bei einem solchen Spülvorgang nicht nachteilig zu beeinflussen, muss der Beladungsgrad des Kraftstoffdampf-Zwischenspeichers bekannt sein. Abhängig von diesem Beladungsgrad wird die Menge des in die Brennräume des Verbrennungsmotors eingespritzten Kraftstoffs variiert.

Bei aus dem Stand der Technik bekannten Verfahren wird die durch den Kraftstoffdampf-Zwischenspeicher angesaugte Kraftstoffmenge über die gemessene Luftzahl λ (Lambda) berechnet und auf einen Sollwert geregelt. Da nun das Ausgasungsverhalten des Kraftstoffs im Tank, welches von den Kraftstoffeigenschaften, von der Umgebungstemperatur, vom Umgebungsdruck und anderen Größen abhängt, in der Regel unbekannt ist, ist auch die in dem Kraftstoffdampf-Zwischenspeicher gespeicherte Kraftstoffmasse unbekannt.

Um den Bedarf an Tankentlüftungsphasen möglichst genau zu bestimmen und die Vorsteuerung der Einspritzkorrektur ideal anpassen zu können, muss die im Kraftstoffdampf-Zwischenspeicher adsorbierte Kohlenwasserstoffmasse, d.h. die so genannte Beladung, bekannt sein.

Die Bestimmung der Beladung des Kraftstoffdampf-Zwischenspeichers erfolgt bei aus dem Stand der Technik bekannten Verfahren beispielsweise aufgrund von direkter Messung der Kohlenwasserstoffkonzentration basierend auf der Spülmenge, wie beispielsweise aus der DE 101 26 520 A1 bekannt, oder durch Messung der Temperatur in dem als Aktivkohlefilter ausgebildeten Kraftstoffdampf-Zwischenspeicher.

Die DE 10 2006 027 572 A1 schlägt vor, die adsorbierte Kohlenwasserstoffmasse durch Bestimmung des Gewichts des Kraftstoffdampf-Zwischenspeichers und durch einen Vergleich mit dem zuvor bestimmten Gewicht des entleerten Kraftstoffdampf-Zwischenspeichers zu erfassen.

### Offenbarung der Erfindung

Trotz der durch die oben beschriebenen Vorrichtungen und Verfahren zur Bestimmung des Beladungszustands eines Kraftstoffdampf-Zwischenspeichers bewirkten Vorteile beinhalten diese noch Potenzial für Verbesserungen. So sind die oben beschriebenen Messverfahren für die Erfassung der Beladung relativ ungenau oder vergleichsweise kompliziert in ihrem Aufbau und damit teuer in der Realisierung.

Es ist entsprechend eine Aufgabe der vorliegenden Erfindung, die oben beschriebenen Nachteile zumindest weitgehend zu vermeiden und eine Vorrichtung und ein Verfahren zur Bestimmung der Beladung eines Kraftstoffdampf-Zwischenspeichers einer Brennkraftmaschine anzugeben, mit denen sich die Beladung sehr schnell, mit hoher Präzision und kostengünstig erfassen lässt.

Eine erfindungsgemäße Vorrichtung zur Bestimmung der Beladung eines Kraftstoffdampf-Zwischenspeichers einer Brennkraftmaschine weist eine schwingungsfähige Lagerung des Kraftstoffdampf-Zwischenspeichers und einen Sensor zur Erfassung einer Eigenfrequenz des Kraftstoffdampf-Zwischenspeichers auf.

Der Sensor kann ein Beschleunigungssensor sein. Im Rahmen der vorliegenden Erfindung ist unter einem Beschleunigungssensor ein Sensor zu verstehen, der geeignet ist, die durch eine Beschleunigung auf eine träge Masse ausgeübte Kraft zu messen. Zur Anwendung kommen hierbei sowohl Weg messende als auch die mechanische Spannung messende Systeme. Beispiele für derartige Beschleunigungssensoren und deren Messprinzipien sind beispielsweise in Konrad Reif (Hrsg.): Sensoren im Kraftfahrzeug, 1. Auflage 2010, Seiten 75-79 beschrieben, die hierin durch Verweis eingeschlossen sind.. Die dort beschriebenen Sensoren sind grundsätzlich im Rahmen der vorliegenden Erfindung einsetzbar.

Unter einer Eigenfrequenz eines Bauteils ist im Rahmen der vorliegenden Erfindung eine Frequenz eines schwingungsfähigen Bauteils zu verstehen, mit der das Bauteil nach einmaliger Anregung als Eigenform schwingen kann.

Die Vorrichtung kann ausgebildet sein, die Bestimmung der Beladung aufgrund von Änderungen der Eigenfrequenz des Kraftstoffdampf-Zwischenspeichers durchzuführen. Die Vorrichtung kann ausgebildet sein, die Bestimmung bei zu Schwingungen angeregtem Kraftstoffdampf-Zwischenspeicher durchzuführen. Die Vorrichtung kann ausgebildet sein, die Bestimmung durch einen Vergleich der Eigenfrequenz bei zumindest teilweise beladenem Kraftstoffdampf-Zwischenspeicher mit der Eigenfrequenz bei unbeladenem Kraftstoffdampf-Zwischenspeicher durchzuführen. Ein zumindest teilweise beladener Kraftstoffdampf-Zwischenspeicher kann durch eine niedrigere Eigenfrequenz als ein unbeladener Kraftstoffdampf-Zwischenspeicher bestimmbar sein. Für die Bestimmung können die Eigenfrequenz bei unbeladenem Kraftstoffdampf-Zwischenspeicher und die Eigenfrequenz bei vollständig beladenem Kraftstoffdampf-Zwischenspeicher als Referenzwerte verwendbar sein.

Bei einem erfindungsgemäßen Verfahren zur Bestimmung der Beladung eines Kraftstoffdampf-Zwischenspeichers einer Brennkraftmaschine wird der Kraftstoffdampf-Zwischenspeicher schwingungsfähig gelagert und eine Eigenfrequenz des Kraftstoffdampf-Zwischenspeichers erfasst.

Für die Erfassung der Eigenfrequenz des Kraftstoffdampf-Zwischenspeichers kann ein Sensor verwendet werden. Der Sensor kann beispielsweise ein Beschleunigungssensor sein. Aufgrund von Änderungen der Eigenfrequenz des Kraftstoffdampf-Zwischenspeichers kann auf die Beladung geschlossen werden. Die Bestimmung kann dabei bei zu Schwingungen angeregtem Kraftstoffdampf-Zwischenspeicher durchgeführt werden. Die Bestimmung kann durch einen Vergleich einer Eigenfrequenz bei zumindest teilweise beladenem Kraftstoffdampf-Zwischenspeicher mit einer Eigenfrequenz bei unbeladenem Kraftstoffdampf-Zwischenspeicher durchgeführt werden. Ein zumindest teilweise beladener Kraftstoffdampf-Zwischenspeicher kann durch eine niedrigere Eigenfrequenz als ein unbeladener Kraftstoffdampf-Zwischenspeicher bestimmt werden. Für die Bestimmung kann eine Eigenfrequenz bei unbeladenem Kraftstoffdampf-Zwischenspeicher und eine Eigenfrequenz bei vollständig beladenem Kraftstoffdampf-Zwischenspeicher als Referenzwerte verwendet werden.

Ein Grundgedanke der vorliegenden Erfindung ist es, die Eigenfrequenz des Kraftstoffdampf-Zwischenspeichers mithilfe eines preiswerten Beschleunigungssensors zu messen. Voraussetzung ist dazu ein elastisch aufgehängter Kraftstoffdampf-Zwischenspeicher, d. h. ein schwingungsfähig gelagerter Kraftstoffdampf-Zwischenspeicher. Im Fahrbetrieb des Kraftfahrzeugs sind Schüttelbewegungen mit der Eigenfrequenz des Systems zu erwarten und diese Eigenfrequenz wird mithilfe des Beschleunigungssensors ermittelt. Durch geänderte Masse, bedingt durch die Beladung des Aktivkohlefilters, verschiebt sich diese Eigenfrequenz zu niedrigeren Frequenzen. Daher kann durch Messung der Eigenfrequenz während des Fahrbetriebs auf den beladungszustand geschlossen werden.

Entsprechend wird vorgeschlagen, den Kraftstoffdampf-Zwischenspeicher elastisch aufzuhängen bzw. schwingungsfähig zu lagern und mit einem Beschleunigungssensor zu versehen. Dann erfolgt eine Bestimmung der Eigenfrequenz des Kraftstoffdampf-Zwischenspeichers mit leerem und vollem Aktivkohlebehälter für die jeweilige Applikation des Systems. Während eines Betriebs des Kraftfahrzeugs wird durch laufende Erfassung der durch Fahrzeugbetrieb ausgelösten Schwingungen mithilfe beispielsweise einer Fourier-Analyse des Signals des Beschleunigungssensors der Beladungszustand erfasst. Der Beladungszustand kann beispielsweise durch einen Vergleich mit den vorab ermittelten Eigenfrequenzen mit den während des Fahrzeugbetriebs erfassten Eigenfrequenzen bestimmt werden. Die vorliegende Erfindung ist insbesondere bei Fahrzeugen mit Ottomotoren mit Tankentlüftungssystem einsetzbar.

### Kurze Beschreibung der Zeichnungen

Weitere optionale Einzelheiten und Merkmale der vorliegenden Erfindung ergeben sich aus der Beschreibung bevorzugter Ausführungsbeispiele, welche in der Figur schematisch dargestellt sind.

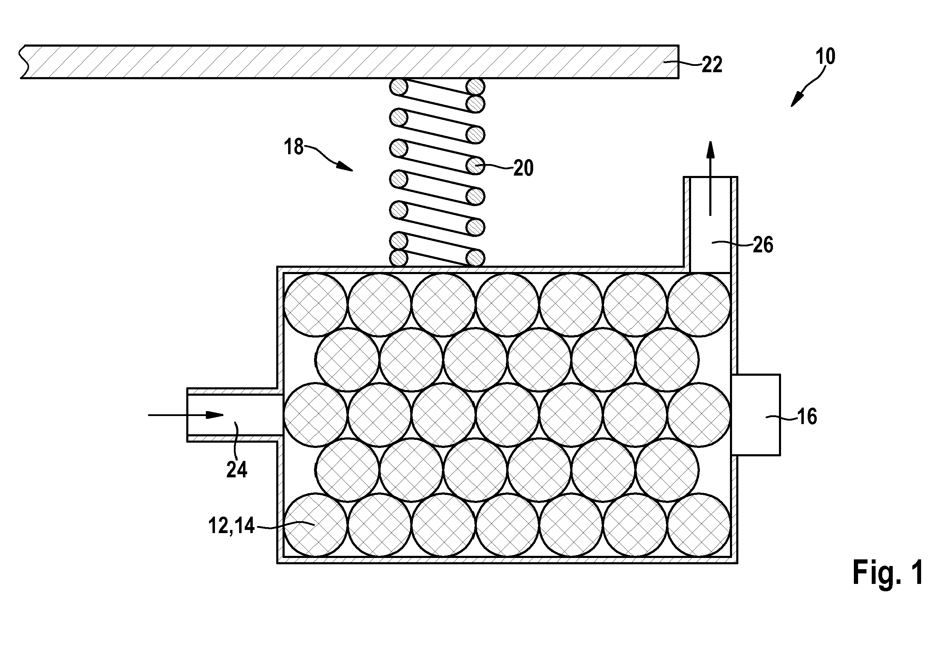

Es zeigt
- Figur 1: eine schematische Darstellung einer erfindungsgemäßen Vorrichtung zur Bestimmung der Beladung eines Kraftstoffdampf-Zwischenspeichers einer Brennkraftmaschine.

### Ausführungsformen der Erfindung

Figur 1 zeigt eine schematische Darstellung einer erfindungsgemäßen Vorrichtung 10 zur Bestimmung der Beladung eines Kraftstoffdampf-Zwischenspeichers 12 einer nicht näher gezeigten Brennkraftmaschine. Der Kraftstoffdampf-Zwischenspeicher 12 kann beispielsweise als Aktivkohlefilter 14 ausgebildet sein. An dem Kraftstoffdampf-Zwischenspeicher 12 ist ein Beschleunigungssensor 16 angebracht. Der Kraftstoffdampf-Zwischenspeicher 12 ist schwingungsfähig gelagert. Beispielsweise ist der Kraftstoffdampf-Zwischenspeicher 12 in einer schwingungsfähigen Aufhängung oder Lagerung 18 gelagert. Diese Lagerung 18 kann beispielsweise, wie in der Figur 1 schematisch dargestellt, mittels einer Feder 20 an einem Karosserieteil 22 realisiert sein. Es versteht sich, dass die Anzahl der Federn 20 nicht auf eine Feder 20 beschränkt ist, sondern mehrere Federn 20 zum Einsatz kommen können. Satt Federn 20 können aber auch Anschlussgummischläuche oder andere Bauteile mit Eignung zur schwingungsfähigen Lagerung vorgesehen sein. Ferner könnte statt einer schwingungsfähigen Aufhängung rein prinzipiell auch vorgesehen sein, den Kraftstoffdampf-Zwischenspeicher 12 aufliegend auf Federelementen 20 zu lagern. In diesem Fall muss sichergestellt sein, dass die Lagerung die Eigenschaften einer Feder aufweist bzw. zu Schwingungen anregbar ist.

Die Vorrichtung 10 kann Teil eines Kraftstoffversorgungssystems einer Brennkraftmaschine sein und insbesondere für den Einsatz in einem Kraftfahrzeug vorgesehen sein. Die Brennkraftmaschine kann beispielsweise ein Verbrennungsmotor, insbesondere ein Ottomotor, eines Kraftfahrzeugs sein. Aus dem Kraftstoffbehälter, wie beispielsweise einem Tank, entweichen Kraftstoffdämpfe. Beispielsweise baut sich bei Erwärmung in dem Tank ein unerwünschter Druck auf. Über eine Entlüftung wird dieser Überdruck abgebaut. Um den Austritt von Kohlenwasserstoffen in die Umgebung zu verhindern, ist an der Entlüftung der Kraftstoffdampf-Zwischenspeicher 12 vorgesehen. So gelangen beispielsweise die Kraftstoffdämpfe über einen Anschluss 24 aus dem Tank in den Kraftstoffdampf-Zwischenspeicher 12 und über einen Auslass 26 in die Umgebung.

Wie erwähnt, ist das Tankentlüftungssystem vorgesehen, um das Entweichen von Kraftstoffdämpfen aus dem Tank in die Umgebung zu verhindern. Zu diesem Zweck ist der Kraftstoffdampf-Zwischenspeicher 12 in Form des Aktivkohlefilters 14 vorgesehen. Es kann dabei in der Belüftungsleitung des Kraftstoffdampf-Zwischenspeichers 12 ein nicht näher gezeigtes Absperrventil vorgesehen sein. Ferner kann in der Leitung zwischen dem Kraftstoffdampf-Zwischenspeicher 12 und dem Saugrohr des Verbrennungsmotors ein Tankentlüftungsventil vorgesehen sein. In dem Tank verdampfender Kraftstoff wird in dem Aktivkohlefilter 12 gespeichert und während des Betriebs des Verbrennungsmotors über das geöffnete Tankentlüftungsventil und das Saugrohr der Verbrennung zugeleitet. Aufgrund der sich dabei einstellenden Druckverhältnisse wird gleichzeitig der Aktivkohlefilter 14 bei geöffnetem Absperrventil mit Frischluft gespült und damit regeneriert.

Zur Steuerung der Tankentlüftung über das Öffnen und Schließen der genannten Ventile kann beispielsweise ein nicht näher gezeigtes Steuergerät dienen. Dem Steuergerät werden, wie nachfolgend noch näher beschrieben wird, Signale des Beschleunigungssensors 16, welcher die Eigenfrequenz des zur Schwingung angeregten Aktivkohlefilters erfasst, zugeführt. Ferner werden dem Steuergerät den Betriebszustand der Brennkraftmaschine charakterisierende Signale sowie das Kraftstoff/Luft-Gemisch charakterisierende Signale zugeführt.

Während der Regenerierung des Aktivkohlefilters 14 gelangen auf oben beschriebene Weise Kohlenwasserstoffdämpfe in das Saugrohr des Verbrennungsmotors und werden von diesem zusammen mit der Frischluft angesaugt. Damit in dem Verbrennungsmotor die richtige Kraftstoffmenge zur Verfügung steht, wird von dem Steuergerät die Einspritzmenge reduziert und das Kraftstoffzumessmittel entsprechend angesteuert. Um den Bedarf an Tankentlüftungsphasen möglichst genau bestimmen zu können und die Vorsteuerung und Einpritzkorrektur optimal anpassen zu können, muss die Masse der absorbierten Kohlenwasserstoffe, d.h. die Beladung, bestimmt werden.

Die Bestimmung der Beladung des Aktivkohlefilters 14, d. h. die Bestimmung der in dem Aktivkohlefilter 14 adsorbierten Masse der Kohlenwasserstoffverbindung kann nun wie folgt erfolgen. Der Aktivkohlefilter 14 wird schwingungsfähig gelagert, beispielsweise mittels der oben beschriebenen schwingungsfähigen Lagerung 18. Ein Beschleunigungssensor 16 wird mit dem Aktivkohlefilter 14 verbunden. Der Beschleunigungssensor 16 erfasst eine Eigenfrequenz des Aktivkohlefilters 14 in einem unbeladenen Zustand und in einem vollständig beladenen Zustand. Diese erfassten Werte, d.h. der Wert der Eigenfrequenz bei unbeladenem Aktivkohlefilter 14 und der Wert bei vollständig beladenem Aktivkohlefilter 14, dienen als Referenzwerte. Während eines Betriebs des Kraftfahrzeugs sind Schüttelbewegungen mit der Eigenfrequenz des Aktivkohlefilters 14 zu erwarten. Diese Eigenfrequenz wird mittels des Beschleunigungssensors 16 während des laufenden Betriebs des Kraftfahrzeugs ermittelt. Durch eine geänderte Masse, bedingt durch die Beladung des Aktivkohlefilters 14, verschiebt sich diese Eigenfrequenz zu niedrigeren Frequenzen. Entsprechend kann die Beladung aufgrund von Änderungen der Eigenfrequenz des Kraftstoffdampf-Zwischenspeichers 12 durchgeführt werden. Insbesondere kann die Bestimmung bei zu Schwingung angeregtem Aktivkohlefilter 14 durchgeführt werden. Dabei wird durch den oben beschriebene Vergleich der Erfassung der Eigenfrequenz bei zumindest teilweise beladenem Kraftstoffdampf-Zwischenspeicher mit der Eigenfrequenz bei unbeladenem Kraftstoffdampf-Zwischenspeicher, d.h. dem Referenzwert bei unbeladenem Aktivkohlefilter 14, auf den Beladungszustand geschlossen. Ein zumindest teilweise beladener Kraftstoffdampf-Zwischenspeicher 12 ist durch eine niedrigere Eigenfrequenz als ein unbeladener Aktivkohlefilter 14 bestimmbar. Die Eigenfrequenzen bei unbeladenem Aktivkohlefilter 14 und bei vollständig beladenem Aktivkohlefilter 14 werden dabei als Referenzwerte verwendet und teilweise beladene Zustände des Aktivkohlefilters 14 können dann durch beispielsweise Interpolation der Referenzwerte ermittelt werden.

## Patentansprüche

1. Vorrichtung (10) zur Bestimmung der Beladung eines Kraftstoffdampf-Zwischenspeichers (12) einer Brennkraftmaschine, **gekennzeichnet durch** eine schwingungsfähige Lagerung (18) des Kraftstoffdampf-Zwischenspeichers (12) und einen Sensor (16) zur Erfassung einer Eigenfrequenz des Kraftstoffdampf-Zwischenspeichers (12).

2. Vorrichtung (10) nach dem vorhergehenden Anspruch, wobei der Sensor (16) ein Beschleunigungssensor (16) ist.

3. Vorrichtung (10) nach einem der vorhergehenden Ansprüche, wobei die Vorrichtung (10) ausgebildet ist, die Bestimmung bei zu Schwingungen angeregtem Kraftstoffdampf-Zwischenspeicher (12) durchzuführen.

4. Vorrichtung (10) nach einem der vorhergehenden Ansprüche, wobei ein zumindest teilweise beladener Kraftstoffdampf-Zwischenspeicher (12) durch eine niedrigere Eigenfrequenz als ein unbeladener Kraftstoffdampf-Zwischenspeicher (12) bestimmbar ist.

5. Vorrichtung (10) nach einem der vorhergehenden Ansprüche, wobei für die Bestimmung die Eigenfrequenz bei unbeladenem Kraftstoffdampf-Zwischenspeicher (12) und die Eigenfrequenz bei vollständig beladenem Kraftstoffdampf-Zwischenspeicher (12) als Referenzwerte verwendbar sind.

6. Verfahren zur Bestimmung der Beladung eines Kraftstoffdampf-Zwischenspeichers (12) einer Brennkraftmaschine, **dadurch gekennzeichnet, dass** der Kraftstoffdampf-Zwischenspeicher (12) schwingungsfähig gelagert wird und eine Eigenfrequenz des Kraftstoffdampf-Zwischenspeichers (12) erfasst wird.

7. Verfahren nach dem vorhergehenden Anspruch, wobei aufgrund von Änderungen der Eigenfrequenz des Kraftstoffdampf-Zwischenspeichers (12) auf die Beladung geschlossen wird.

8. Verfahren nach einem der beiden vorhergehenden Ansprüche, wobei die Bestimmung durch einen Vergleich einer Eigenfrequenz bei zumindest teilweise beladenem Kraftstoffdampf-Zwischenspeicher (12) mit einer Eigenfrequenz bei unbeladenem Kraftstoffdampf-Zwischenspeicher (12) durchgeführt wird.

9. Verfahren nach einem der drei vorhergehenden Ansprüche, wobei ein zumindest teilweise beladener Kraftstoffdampf-Zwischenspeicher (12) durch eine niedrigere Eigenfrequenz als ein unbeladener Kraftstoffdampf-Zwischenspeicher (12) bestimmt wird.

10. Verfahren nach einem der vier vorhergehenden Ansprüche, wobei für die Bestimmung eine Eigenfrequenz bei unbeladenem Kraftstoffdampf-Zwischenspeicher (12) und eine Eigenfrequenz bei vollständig beladenem Kraftstoffdampf-Zwischenspeicher (12) als Referenzwerte verwendet werden.
